# EUROPEAN PATENT APPLICATION

(11) **EP 4 312 442 A1**
(43) Date of publication of application: **31.01.2024**
(21) Application number: 22187781.4
(22) Date of filing: 29.07.2022
(51) Int. Cl.: H04W 4/40, H04W 4/80

(54) **VEHICLE SYSTEM ACCESS VIA BLE GATT CHARACTERISTICS**

(71) Applicant: Harman Becker Automotive Systems GmbH, 76307 Karlsbad (DE)
(72) Inventor: Azzouni, Hatem, 85229 Markt Indersdorf (DE); Saheb S, Babjan, 560043 Bangalore (IN)
(74) Representative: Kraus & Weisert Patentanwälte PartGmbB

(57) **Abstract**

A method for making data of a vehicle hardware system accessible to an electronic device using a Generic Attribute (GATT) profile comprises providing at least one GATT profile packet to the electronic device based on an established Bluetooth communication with the electronic device, wherein the at least one GATT profile package includes a GATT characteristic, which is synchronized with a corresponding to a data value in the vehicle hardware system, and receiving at least one request from the electronic device using the GATT characteristic corresponding to the vehicle data value.

## Description

### TECHNICAL FIELD

Various examples of the disclosure generally relate to accessing data included in a vehicle hardware system. Various examples of the disclosure specifically relate to accessing a data value in a vehicle hardware system using a Generic Attribute Profile (GATT) based on a Bluetooth communication protocol.

### BACKGROUND

In order to interact with a vehicle, users need access to data included in in-vehicle networks (IVN) of a vehicle hardware system. Such data may comprise data, which may represent abstractions for specific functions or a values (e.g. sensor values) of the vehicle hardware system.

For passengers to easily access various vehicle features and settings via user equipment, such as smartphones, tablets or similar, existing solutions synchronize with the vehicle using an internet connection via a backend service in between or use specific Software Development Kits (SDK) and libraries to define communication between mobile user equipment and the vehicle hardware system.

### SUMMARY

Accordingly, there is a need for advanced techniques for accessing data of a vehicle hardware system. In particular, there is a need for techniques that alleviate or mitigate at least some of the above-identified restrictions and drawbacks.

This need is met by the features of the independent claims. The features of the dependent claims define further advantageous examples.

In the following, the solution according to the present disclosure is described with regard to the claimed methods as well as with regard to the claimed electronic devices, computer program products, non-transitory computer-readable storage media, and vehicles, wherein features, advantages, or alternative embodiments can be assigned to the other claimed objects and vice versa. For example, the claims related to the electronic devices can be improved with features described in the context of the methods, and the methods can be improved with features described in the context of the electronic devices.

A method is provided for accessing data values of a vehicle hardware system using a Generic Attribute profile (GATT) for exposing and exchanging these data values.

A vehicle, or vehicle hardware system or in general any hardware system, may include a first electronic device, for example a computing device such as vehicle head unit or any other computing device, which executes or has access to data in the vehicle hardware system, specifically to data in an vehicle-internal communication network (in-vehicle networks, IVN), more specifically to a hardware abstraction layer of an operating system executed in or for the vehicle hardware system. The first electronic device may be connected to or may include a network node, in other words may provide a wireless network connectivity to another electronic device, using a using a Generic Attribute profile (GATT), which may be included and/or stored in the vehicle hardware system, according to a current or future Bluetooth communication standard (i.e. protocol), e.g. a Bluetooth Low Energy (BLE) communication standard. The vehicle hardware system may include data comprising a plurality of data values describing and/or defining and/or controlling the vehicle hardware system. In other words, the Hardware Abstraction Layer may represent the (only) communication interface between the operating system and the vehicle hardware system, in particular the in-vehicle communication networks. The electronic device may communicate to another electronic device, which may be not included in the (vehicle) hardware system and may not have direct access to information/data in the (vehicle) hardware system, and which may be for example a mobile electronic user device, based on a Bluetooth communication protocol, in other words, there may be an established connection to the other electronic device, i.e. that devices may be paired according to a Bluetooth communication protocol. However, it is to be understood that at least some of the disclosed steps for synchronizing vehicle (i.e. in-vehicle) data values and GATT profile characteristics may be performed also without an established Bluetooth connection.

In a step, the electronic device accesses data, in particular at least one data value, stored in the vehicle hardware system, i.e. a vehicle data value, in other words establishes read and/or write access to a specific vehicle data value in the vehicle hardware system. In general, a vehicle data value may represent or comprise information describing or defining the underlying vehicle hardware system, i.e. a condition, status or state of the hardware system, and/or control information of the vehicle hardware system, and may also be referred to as vehicle data, data block, data structure, or in general a part of the data available or stored in the vehicle hardware system. For example, the vehicle data value may be included in data communicated from and to, an in-vehicle communication network (IVN).

In another step, the electronic device accesses a GATT profile, which may be stored in the electronic device, or in general in the hardware system or the network node providing communication functionality, in particular a characteristic of the GATT profile. In other words, the electronic device establishes read and/or write access to a specific GATT characteristic, or value of the GATT characteristic. In general, a GATT characteristic may refer to an entry in the GATT profile, e.g. in form of a list entry, and may comprise at least one data value and or additional metadata, which is to be provided from a GATT server to a GATT client during use of the GATT Profile and/or using a GATT Service.

In another step, the electronic device synchronizes the vehicle data value and the GATT characteristic, wherein after synchronizing, the vehicle data value and and the GATT characteristic have the same value, or in general, at least one common or same value. In various examples, synchronization may be performed in both directions, or only from the GATT characteristic to the data value in the vehicle hardware system, or only from the data value in the vehicle hardware system to the GATT characteristic. In such a way, the GATT characteristic may include at least part of the data, specifically a data value of the vehicle hardware system, describing or defining or controlling the underlying vehicle hardware system. In various embodiments, at least one value and/or metadata of a vehicle data value or data structure, specifically an Android VHAL property, may be synchronized with the GATT characteristic, or a plurality of data values may be synchronized, optionally a description, or a permission or similar metadata may be synchronized and/or therefore may be included in both the vehicle hardware system and/or VHAL and the GATT characteristic.

Accessing the vehicle data value may comprise accessing data in an in-vehicle network, and/or a Hardware Abstraction Layer of an operating system executed in the vehicle hardware system, wherein the Hardware Abstraction Layer provides access to the in-vehicle communication network (IVN). A Hardware Abstraction Layer may be a Vehicle Hardware Abstraction Layer (VHAL, 106) of an Android operating system, and the vehicle data value may be a VHAL property, or the Hardware Abstraction Layer may be included in any suitable operating system of a vehicle hardware system.

In various examples, the method may further comprise providing the synchronized GATT profile, i.e. the GATT profile including at least one entry synchronized with a corresponding vehicle data value, to another electronic device, e.g. a mobile user equipment, based on an established Bluetooth connection and as generally defined for such provision of GATT profiles. Therein, at least one GATT profile packet may be provided to the other electronic device based on the Bluetooth communication protocol the other electronic device, wherein the at least one GATT profile package includes the at least one GATT characteristic corresponding to the vehicle data value. The electronic device may receive a request from the paired other mobile electronic device using the GATT characteristic corresponding to the vehicle data value. Such a request may be a request to update or write or read a GATT characteristic stored in the electronic device, or to subscribe to a change notification, or similar. In other words, an entry in the GATT profile may be used to provide and exchange information between the vehicle hardware system and a mobile user equipment, or any other electronic device outside the vehicle hardware system, which is capable of a Bluetooth communication.

Correspondigly, a method is provided, for an electronic device, such as a (mobile) user equipment (UE), and acting as GATT client, for accessing data in a vehicle hardware system, using a Generic Attribute (GATT) profile.

In a step, at least one GATT profile packet from the electronic device is received, from an electronic device (acting as Bluetooth GATT Server) included in the hardware system, or having access to an operating system of the hardware system, based on an established Bluetooth communication with the electronic device, wherein the at least one GATT profile package includes at least one GATT characteristic, which is synchronized with a corresponding vehicle data value in the vehicle hardware system. In this step, the GATT characteristic, and an/or an associated GATT service, which may represent the corresponding in-vehicle hardware system data, are discovered and/or requested and/or accessed by the UE.

In a further step, a request is sent to the electronic device in the vehicle hardware system using the GATT characteristic corresponding to the vehicle data value. The request may comprise connecting to the GATT service, in order to read and/or write to the GATT characteristic, and/or subscribe to a change notification, or similar operations.

Such steps for accessing the VHAL properties using a GATT Profile may be executed by any (mobile) user equipment (UE), such as an electronic device, a smart phone, a tablet, or any other smart or wearable computing device, in other words, a wireless electronic device or a mobile electronic device.

When including vehicle hardware system data in a GATT profile, specifically similarities between data in a hardware abstraction layer, such as Android VHAL properties and the BLE GATT profile may be exploited, wherein it becomes possible to expose VHAL services using GATT services and map the Android CarProperties to GATT characteristics with reduced computational effort and reduced network traffic, thereby allowing e.g. vehicle passengers to easily access (read/write) to some of the vehicle features or settings via an application in their smartphones, wherein the application will access to those features or settings using the BLE GATT. For example, for rear-seat passengers who do not have access to the head unit screen or controls such as the HVAC temperature control or radio audio level control. In other examples, passengers in public transport may read information on their smartphone about the trip (current speed, remaining time to destination, estimated time of arrival, next station) or also send, for example, a request to the bus driver to stop in the next station. Advantageously, the android automotive VHAL and the Bluetooth GATT profile may be used in a standard way without need for a specific SDK or library to be included in either the HU or the smartphone as we are going to use the standard Bluetooth android APIs. This is a significant advantage compared to the already existing solutions where the HU and the smartphone needs to sync using internet connection via a backend service in between and of course specific SDKs and libraries are needed.

An electronic device is provided, comprising a network node, an interface circuit, communicatively coupled to the network node, configured to communicate with a another electronic device using a Bluetooth communication protocol, a processor coupled to the interface circuit and memory, coupled to the processor, configured to store program instructions, wherein, when executed by the processor, the program instructions cause the electronic device to perform the steps of any method or combination of methods according to the present disclosure.

A computer program or computer-program product and a non-transitory computer-readable storage medium including program code is provided. The program code can be executed by at least one processor of an electronic device. Upon executing the program code, the at least one processor performs any method or combination of methods according to the present disclosure.

A vehicle comprises at least one electronic device according to the present disclosure.

For the electronic devices, computer program products, non-transitory computer-readable storage medium, and vehicle, advantages may be realized, which correspond to the advantages described for the methods.

It is to be understood that the features mentioned above and features yet to be explained below can be used not only in the respective combinations indicated, but also in other combinations or in isolation, without departing from the scope of the present disclosure. In particular, features of the disclosed embodiments may be combined with each other in other embodiments. In other words, the features mentioned above and those yet to be explained below may be used not only in the respective combinations indicated, but also in other combinations or in isolation without departing from the scope of the disclosure.

### BRIEF DESCRIPTION OF THE DRAWINGS

These and other objects of the invention will be appreciated and understood by those skilled in the art from the detailed description of the preferred embodiments and the following drawings in which like reference numerals refer to like elements.
FIG. 1 schematically illustrates a communication stack of an Android vehicle operating system, according to various examples.
FIG. 2 schematically illustrates the data structure of a BLE GATT profile 200, according to various examples.
FIG. 3 schematically illustrates a system 300 configured for performing steps of a method for accessing VHAL vehicle properties using a BLE GATT profile, according to various examples.
FIG. 4 schematically illustrates an application executed on a vehicle computing device configured for performing updating operations between a GATT profile and a Vehicle HAL, according to various examples.
FIG. 5 schematically illustrates a method for making data values of a vehicle hardware system accessible using a GATT profile, according to various examples.
FIG. 6 schematically illustrates further method for making data values of a vehicle hardware system accessible using a GATT profile, according to various examples.
FIG. 7 schematically illustrates a method for accessing data values of a vehicle hardware system using a GATT profile, according to various examples.
FIG. 8 schematically illustrates an electronic device configured for executing one of the disclosed methods, according to various examples.

### DETAILED DESCRIPTION OF EXAMPLES

In the following, embodiments of the invention will be described in detail with reference to the accompanying drawings. It should be understood that the following description of embodiments is not to be taken in a limiting sense. The scope of the invention is not intended to be limited by the embodiments described hereinafter or by the drawings, which are taken to be illustrative examples of the general inventive concept. The features of the various embodiments may be combined with each other, unless specifically noted otherwise.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, elements, or other physical or functional units shown in the drawings or described herein may also be implemented by an indirect connection or coupling.

Various examples of the present disclosure generally are applicable to a plurality of hardware systems including electronic computing devices, vehicle head units or computing devices for a vehicle dashboard, mobile devices, wireless devices, computing devices, in general user equipment (UE), network nodes, vehicle head units user, computing devices, or any other kind of electrical processing devices, which may run on operating systems and/or provide a Wi-Fi connectivity based on a Bluetooth communication protocol. All references to the circuits and other electrical devices and the functionality provided by each are not intended to be limited to encompassing only what is illustrated and described herein. It is recognized that processing device disclosed herein may include any number of microcontrollers, a general-purpose processor unit (CPU), a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

The disclosed techniques generally relate to exposing vehicle data, and will be described with respect to an an example using an Android operation system, specifically HAL (e.g. Android Vehicle HAL properties) data values to a UE using the BLE GATT profile. This aims to allow vehicle passengers easily access various vehicle features and settings via their smartphones. For example, for rear-seat passengers who do not have access to the head unit screen or controls such as the HVAC temperature control or radio audio level control. In the following, the VHAL and BLE GATT profile and similarities between the two will be described in the context of a vehicle operating system such as Android Automotive, however it is to be understood that the disclosed techniques may be used for communication between a UE and any technical system including system-internal networks and operating on any operating system with a Hardware Abstraction Layer, and/or any other data values of vehicle hardware services that can be accesses for read and/or write operations.

In order to physically interact with a car, Android Automotive needs access to the in-vehicle networks (IVN), i.e. one or more vehicle-internal communication networks, and to get access to the car's IVNs, Android Automotive includes the Vehicle Hardware Abstraction Layer (Vehicle HAL). This allows not only a connection to the CAN bus but also to other vehicle internal networks such as the Local Interconnect Network (LIN) or different future in-vehicle communication standards. The Vehicle HAL is one of many HALs available within Android (Automotive). It describes the communication interface with the IVN. The VHAL defines a list of Vehicle properties (i.e. CarProperties), and each property is an abstraction for a specific function or a sensor value. OEMs may add their own custom properties. This is called VHAL extension.

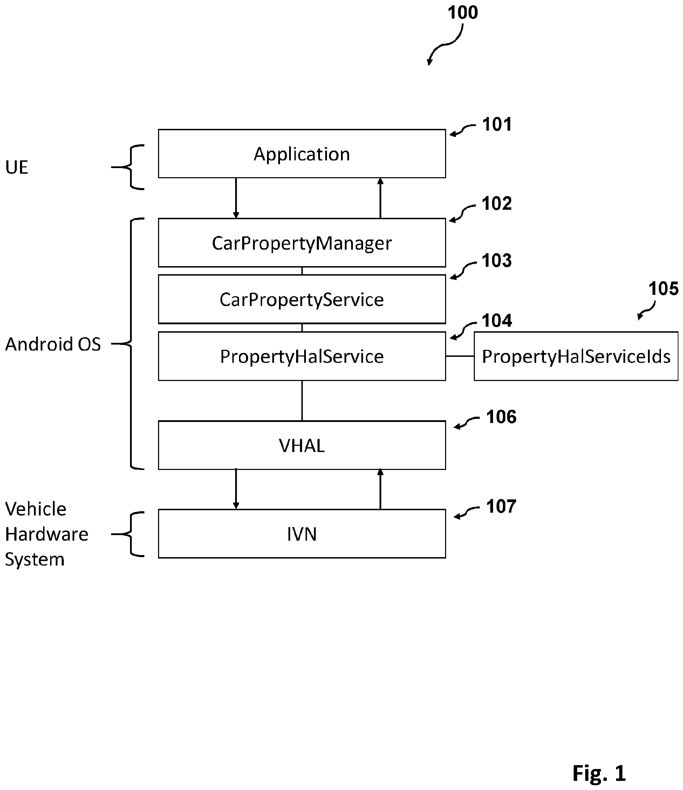

The VHAL is made available to the application layer by the CarPropertyManager that exposes the API to register, get and set CarProperty values. An overview on the communication stack between the hardware specific driver implementation and the application layer can be found below in FIG. 1.

FIG. 1 schematically illustrates a communication stack 100 between the hardware specific driver implementation and the application layer 101 of a vehicle, according to various examples.

As can be seen in FIG. 1, the communication stack according to a vehicle operating system includes Application layer 101, CarPropertyManager 102, CarPropertyService 103, PropertyHalService 104, which correspond to Android Java classes exposed in the android framework and used to interact with the VHAL 106, as well as VHAL 106, and IVN 107. The Application layer 101 is bilaterally communicatively coupled to the CarPropertyManager 102. Therein, the PropertyHalService 105 contains a list of property IDs, i.e. PropertyHalServicelds, and corresponding permissions. In operation, the CarPropertyManager 102 exposes an API to registers, and to get, set properties of the VHAL. The CarPropertyService 103 implements the interface between the Application layer 101 and the VHAL based on a CarProperty.aidl file, and checks permissions for requests regarding CarProperties. The PropertyHalservice 104 communicates requests and data from and to the VHAL 106, wherein the VHAL represents the only operation system interface to the IVN 107.

Vehicle property Services 103, also referred to as VHAL Services, provide the application layer 101 access to domain-specific information (vehicle properties, CarProperties) of the VHAL, which is in bilaterally communicatively coupled to the IVN, and therefore may provide to the data in the IVN. Various examples for Vehicle property Services 103 may include one or more of sensor service, information service, audio service, cabin service, Heating, Ventilation and Air Conditioning (HVAC) service, Vehicle Driving service, among others. CarPropertyServices may be associated with a plurality of subordinated VHAL properties.

A HVAC service 103, for example, may be used to query/change HVAC vehicle properties (i.e. VHAL properties) like for example HVAC_FAN_SPEED, HVAC_FAN_DIRECTION, HVAC_SEAT_TEMPERATURE, HVAC_TEMPERATURE_CURRENT, and similar properties, which are defined in the automotive android OS.

Correspondigly, CarPropertyValues may be get or set from the application layer 101 via CarPropertyManager 102, or it may be possible to subscribe for a CarProperty Change such that notification is received with the new changed value.

A vehicle property (i.e. CarProperty) has a value and metadata that is defined in a data structure. In various examples, a vehicle property may be tied to a zone (i.e. left or right) so that corresponding vehicle properties may be addressed as instances (e.g., left, and right instance). properties may also have a defined data type (string, integer, float and so on) and as general documentation of course the significance of the provided value, such as if speed is defined in km/h or miles/h. properties may be read-only (used to get information or data from VHAL to application level), write-only (used to pass information or data to VHAL level), or read and write. Each property may be uniquely identified by an int32 key ID and may have a predefined data type.

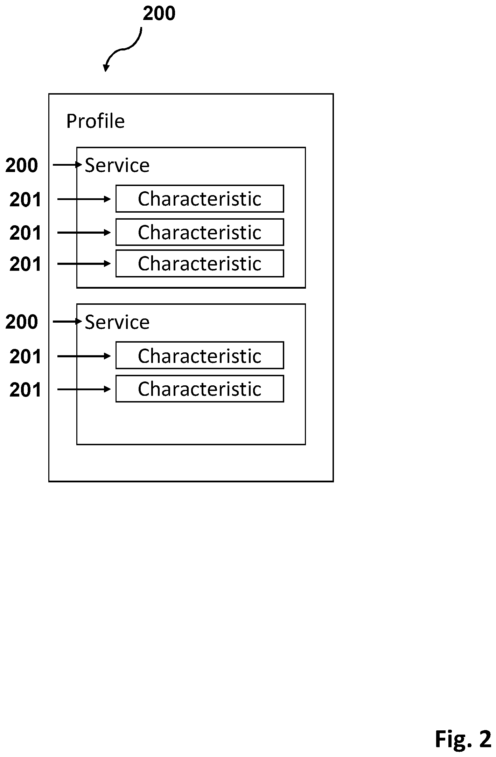

FIG. 2 schematically illustrates the data structure of a BLE GATT profile 200, according to various examples.

GATT is an acronym for the Generic Attribute profile, and it defines the way that two Bluetooth Low Energy (BLE) devices transfer data back and forth using concepts called Services and characteristics. The term GATT and GATT profile may be used interchangeably and may be associated with any current (e.g. BLE) and future Bluetooth communication protocol. It makes use of a generic data protocol called the Attribute Protocol (ATT), which is used to store Services, characteristics and related data in a simple lookup table using 16-bit IDs for each entry. A GATT profile may have a list format, wherein Services (and corresponding subordinated characteristics) supported or offered by the GATT Server is included in the list with a unique ID.

As can be seen in FIG. 2, the BLE GATT profile 200 includes a plurality of Services 200 and a plurality of subordinated characteristics 201. The Services 200 are used to break data up into logic entities, in other words, a Service 200 may contain specific chunks of data called characteristics 201. A Service 200 may have one or more characteristics 201, and each Service 200 may be identified and distinguished from other Services 200 and characteristics 201 by means of a unique numerical ID called a Universal Unique Identifier (UUID). Accordingly, the lowest level data entity or concept in GATT transactions may be one or more characteristics 201, wherein a characteristic 201 may encapsulate a single data point or data block. Similarly to Services 200, each characteristic may be identified and distinguished from other Services 200 and characteristics 201 by means of a unique pre-defined UUID.

The GATT comes into play once a dedicated Bluetooth connection is established between two devices, meaning that the devices are paired and already gone through the advertising process governed by the Generic Access profile (GAP). An important concept to understand with GATT is the server/client relationship. The GATT Server (network node, e.g. Vehicle Head Unit or other computing device in the vehicle), which includes and holds the Services 200 and characteristics 201 data, and the GATT Client (UE, e.g. a phone/tablet), which sends requests to GATT server to get/set the data or subscribe for a notification when a data change.

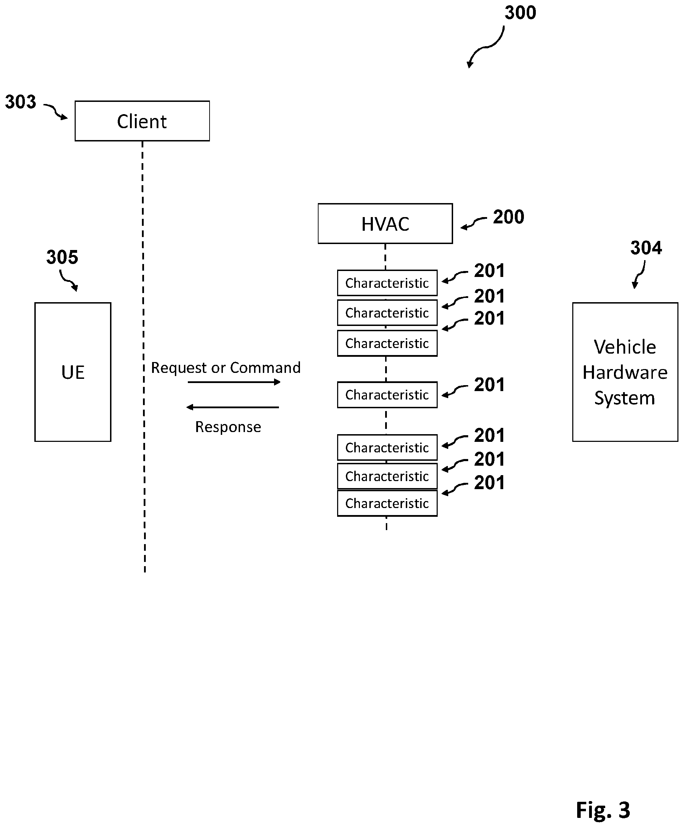

FIG. 3 schematically illustrates a system 300 configured for performing steps of a method for accessing VHAL vehicle properties using a BLE GATT profile, according to various examples.

As can be seen in FIG. 3, a GATT client 303 performed on a mobile device 305, which accesses HVAC CarProperties of a VHAL layer associated with an operation system of a vehicle computing device or vehicle hardware system 304.

The transactions are started by the primary mobile device 305, which represents a GATT Client, and which receives response from a secondary computing device 304 included in the vehicle hardware system, which represents a GATT Server. After a pairing process between mobile device 305 and vehicle computing device 304, a Wi-Fi connection between the two electronic devices is established according to on a Bluetooth communication protocol, i.e. the electronic devices 304 and 30 are paired. Before starting access operations, the GATT Client 303 must perform Services Discovery steps to discover all the services and characteristics hosted by the GATT Server and what are the access rights. According to one or more Service Discovery steps, the GATT Client 303 receives the GATT profile, i.e. one or more GATT profile packets, via the established Wi-Fi connection from the GATT Server. The one or more packets include on or more VHAL CarProperties, i.e. Services 301 and/or characteristics 302, which may be stored in the GATT profile of the GATT Server 304. Thereby, the GATT Client 303 discovers, which Services 301 and characteristics 302 are available on the GATT Server.

In the example of FIG. 3, the GATT profile includes a HVAC Service 301 and a plurality of subordinated HVAC characteristics 302, and therefore, the Client 303 discovers or receives information about these CarProperties 301, 302 as part of and included in the GATT profile discovery.

In a further step, the GATT Client 303 may connect to a discovered Service 301 in order to send requests regarding the characteristics 302. Accordingly, the GATT Client may send requests or commands to the GATT Server and/or receive responses from the GATT Server, based on the established Bluetooth communication protocol, and based on and/or using the one or more discovered VHAL CarProperties. As such, the GATT client may set or get one or more of the VHAL CarProperties, or subscribe for a change notification, or similar.

A characteristic may be part of a service, and it may represent a piece of information/data that a server wants to expose to a client. For example, the battery level characteristic represents the remaining power level of a battery in a device which can be read by a client. The characteristic contains other attributes that help define the value it holds, for example, properties represented by a number of bits and defining how a characteristic value can be used. For example, defining the access mode read, write, write without response or configure a notification/indication if the value is changed, and/or Descriptors used to contain related information about the characteristic Value. For example extended properties, user description, fields used for subscribing to notifications and indications, and a field that defines the presentation of the value such as the format and the unit of the value.

In addition to the access mode, the GATT server may define permissions independently for each characteristic. The server may allow some characteristics to be accessed by any client, while limiting access to other characteristics to only authenticated or authorized clients. These permissions are usually defined as part of a higher-level profile specification.

The disclosed techniques are based on the finding that VHAL properties and the BLE GATT characteristics display great similarity with regards to data access and the data definition itself. From data access point of view, both VHAL and the BLE GATT profile implementations provide APIs to the application layer to set (write) and/or get (read) values and subscribe to get notified when a value is changed. The data may be grouped in both cases within services specific to domains (e.g. vehicle geometries or the like).

A vehicle data value data structure, as included in the GATT profile, e.g. an entry in the list comprising the GATT Services and/or characteristics representing a vehicle data value, may have unique ID, a value and metadata to define the access mode, the type and configuration data.

By exploiting these similarities between the VHAL properties and BLE GATT profile, it becomes possible to expose the VHAL services using GATT services and map the CarProperties to GATT characteristics with reduced computational effort and network traffic, thereby allowing e.g. vehicle passengers to easily access (read/write) to some of the vehicle features or settings via an application in their smartphones, wherein the application will access to those features or settings using the BLE GATT. Advantageously, the android automotive VHAL and the Bluetooth GATT profile may be used in a standard way without need for a specific SDK or library to be included in either the HU or the smartphone as we are going to use the standard Bluetooth android APIs. This is a significant advantage compared to the already existing solutions where the HU and the smartphone needs to sync using internet connection via a backend service in between and of course specific SDKs and libraries are needed.

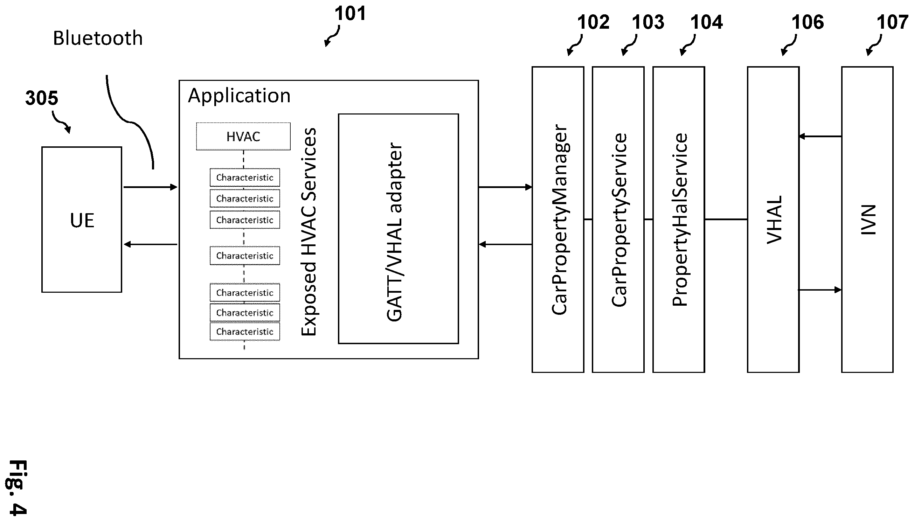

FIG. 4 schematically illustrates an application executed on a vehicle computing device configured for performing updating operations between a GATT profile and a Vehicle HAL, according to various examples.

In Figure 4, the CarPropertyManager 102, the CarPropertyService 103, and the PropertyHalService 106 belong to an operating system of the car, wherein they provide read/write access to the IVN 107, which are part of the vehicle hardware system.

In order to expose VHAL properties using the GATT characteristics, a VHAL/GATT adapter service 101 is implemented at the application layer, which maps the CarProperties to GATT characteristics for each CarPropertyService to be exposed.

The application 101, also referred to as service or computer program, may operate as a VHAL/GATT adapter or synchronizer, and may be performed on a computing device of the vehicle hardware system, however also may also fully or at least partly be performed as a cloud computing service.

The computing device may include or may be communicatively coupled to a network node providing a Wi-Fi- connectivity based on a Bluetooth communication protocol, and may be configured to perform any method or combination of methods described herein. The application 101 is bilaterally communicatively coupled to the vehicle operating system and/or the CarPropertyManager, and therefore has read/write access to the VHAL and VHAL properties. The application also has (read/write) access to the GATT profile defined and used by the Bluetooth communication protocol. Accordingly, the application 101 may bilaterally synchronizing or updating certain VHAL properties with the GANTT profile. In other words, VHAL properties (Services, characteristics) may be read from the VHAL and corresponding entries in the GATT profile may be updated with the read data, and vice versa. In other words, when a new value for a characteristic is set in the GATT profile stored on the vehicle computing device acting as a GATT server, the VHAL may be updated accordingly to represent this new value, and vice versa.

When a user inputs a request for information or a control instruction on his mobile device 05, the input is transferred via an established standard Bluetooth connection to the vehicle computing device running the application 101, which processes the user input by performing corresponding read/write accesses to the GATT profile in order to update the GATT profile or read information from the GATT profile, which is then automatically synchronized with the VHAL by the application 101.

In various examples, by the VHAL/GATT adapter application 101, may access a CarPropertyService of the VHAL, with subordinated CarProperties of the VHAL, and create (or update) a corresponding entry in the GATT profile. For example, a VHAL CarPropertyService may correspond to a GATT Service, and a VHAL CarProperty may correspond to a GATT characteristic. Therefore, the GATT profile may provide for an established communication protocol, wherein in the GATT profile, new entries may be inserted or updated, which represent VHAL services and/or properties. The corresponding GATT Services/characteristics and VHAL Services/characteristics may be kept synchronized (i.e. having the same values) by the VHAL/GATT adapter application 101.

In various examples, the HVAC Vehicle property service in the VHAL may include many possible Vehicle properties to read/change like HVAC_FAN_SPEED, HVAC_FAN_DIRECTION, HVAC_SEAT_TEMPERATURE, HVAC_TEMPERATURE_CURRENT, and similar properties.

The passenger seating in the rear left seat, for example, who does not have access to the HVAC Control buttons, still it is possible for him to increase/decrease the temperature using his phone without interrupting the driver and asking him to do so. Also, each property can be tied to a zone in the car, for example, the right front seat or the rear left seat, etc. Therefore, if the HVAC supports multi-zone differentiation it is possible to control, for example, the rear left seat temperature by changing the CarProperty HVAC_SEAT_TEMPERATURE for the Zone REAR_LEFT.

Following the same idea explained for the HVAC use case, a passenger may increase or decrease the media audio level, change the media source or the radio station from his phone. Android does not define CarProperties for media, accordingly a new service may be defined to expose properties from CarMediaManager and MediaController.

The passenger may also have access to read-only information such as current speed of the car, fuel level, outside temperature, and similar, even though he does not have access to the Head Unit screen or the cluster. Other possible read only information are the ODB2 Live Sensor Data Reports, wherein the driver may have access to some of the diagnostic data.

Another possible application is public transport where passengers may read information on their smartphone about the trip (current speed, remaining time to destination, estimated time of arrival, next station) or also send, for example, a request to the bus driver to stop in the next station.

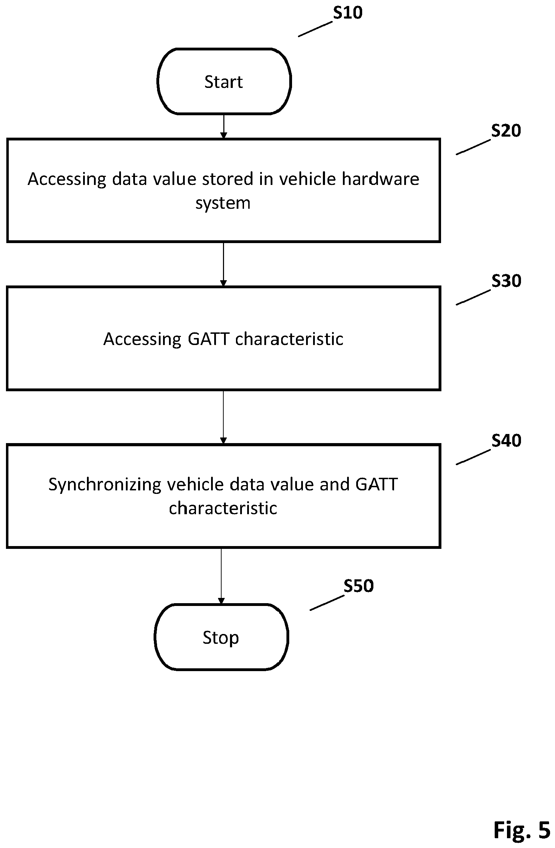

FIG. 5 schematically illustrates a method for making data of a vehicle hardware system accessible using a GATT profile, according to various examples.

The method starts in step S10. In step S20, a vehicle hardware system, specifically a Vehicle Hardware Abstraction Layer (VHAL, 106) for the vehicle hardware of an operating system executed for a vehicle hardware system is accessed, and a vehicle data value is accessed, in order to perform read/write operations on the vehicle data value. In step S30, a GATT characteristic (201) of a Generic Attribute Profile (GATT) according to a Bluetooth communication standard is accessed, in order to perform read/write operations on data values and/or metadata of the GATT characteristic. In step S40, the vehicle data value and the GATT characteristic are synchronized, such that if one of the two includes a new value, the other one of the two is updated with the new value. In other words, a data synchronization is performed, wherein the newer data value of one of the vehicle data value and the GATT characteristic is written over the old data value of the other one of the vehicle data value and the GATT characteristic. In various examples, the synchronization may be performed based on a request of GATT Client and/or based on a notification subscription, and/or based on the latest change to any one of the vehicle data value and the GATT characteristic, such as for example based on a time stamp associated with either of the vehicle data value or the GATT characteristic, such that it is clear, which value is to be updated with the other one. The method ends in step S50.

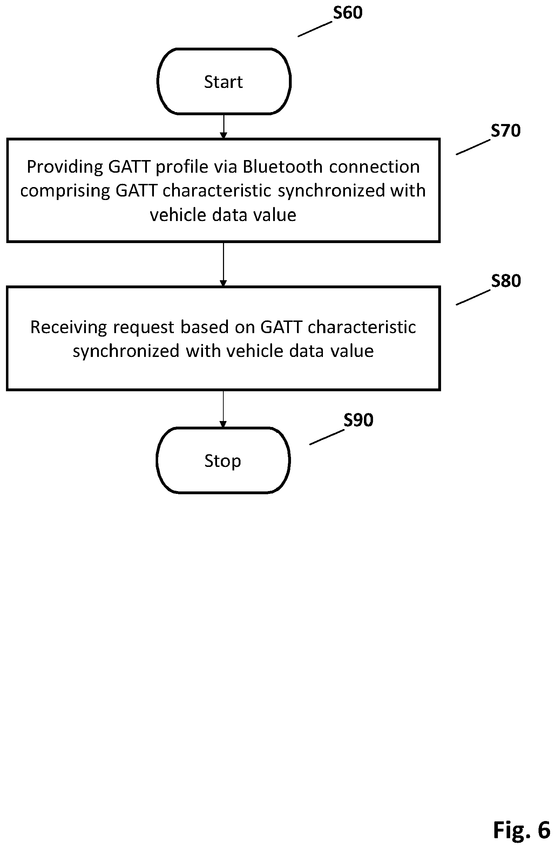

FIG. 6 schematically illustrates further method for making data of a vehicle hardware system accessible using a GATT profile, according to various examples.

The method starts in step S60. In step S70, at least one GATT profile packet is provided to an electronic device, e.g. a mobile electronic user device, using a Generic Attribute Profile (GATT) according to a Bluetooth communication standard, wherein the at least one GATT profile package includes at least one GATT characteristic (201) synchronized with a Vehicle Hardware Abstraction Layer (VHAL, 106) property of an operating system executed for a vehicle hardware system. In another optional step S80, a request is received from the electronic device using the GATT characteristic (201) corresponding to the vehicle data value. The method ends in step S90.

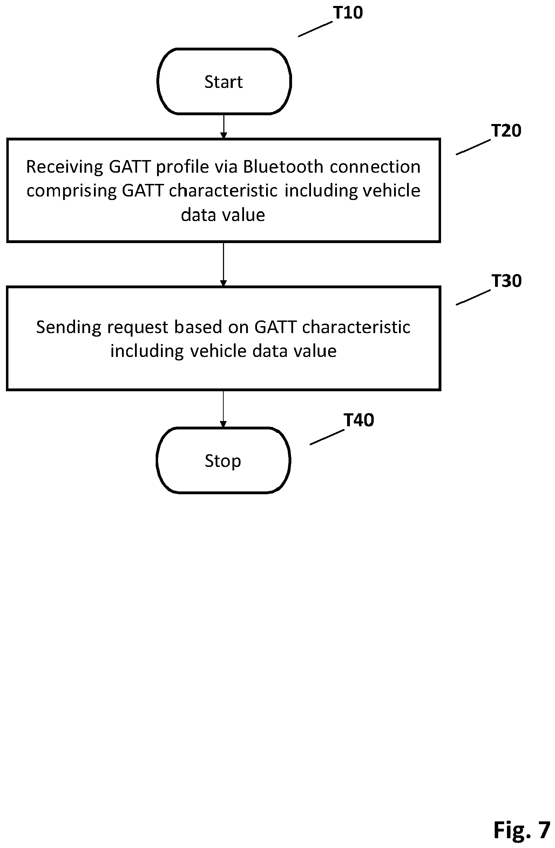

FIG. 7 schematically illustrates a method for accessing data of a vehicle hardware system using a GATT profile, according to various examples.

The method starts in step T10. In step T20, at least one GATT profile packet is received from an electronic device, e.g. a vehicle head unit or other computing device included in a vehicle, using a Generic Attribute Profile (GATT) according to a Bluetooth communication standard, wherein the at least one GATT profile package includes at least one GATT characteristic (201) synchronized with a vehicle data value of a vehicle hardware system, e.g. a Vehicle Hardware Abstraction Layer (VHAL, 106) property of an operating system executed for a vehicle hardware system. In another optional step T30, a request is sent from to the electronic device using the GATT characteristic (201) corresponding to the vehicle data value. The method ends in step T40.

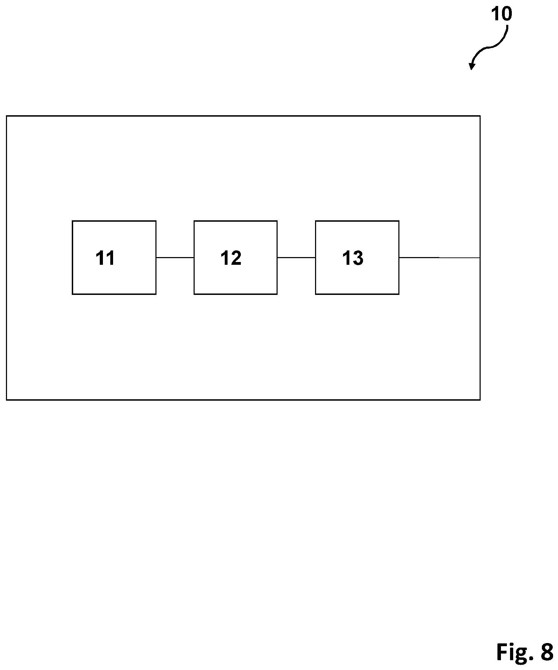

FIG. 8 schematically illustrates an electronic device 10, according to various examples.

The electronic device 10 comprises a network node 13, configured for communication based on a Bluetooth communication protocol, a processor 12 communicatively coupled to the network node, and memory 11, coupled to the processor 12, configured to store program instructions, wherein, when executed by the processor 12, the program instructions cause the electronic device 10 to perform a method or any combinations of methods as herein described.

From the above said, some general conclusions may be drawn:
Examples are described with reference to the Android OS API Reference published by Google LLC and the Open Handset Alliance as part of the Android Open Source Project, and a Vehicle HAL, however it is to be understood that the disclosed techniques may be applied to any hardware abstraction layer and/or any operating system and/or any hardware system. In this regard the term vehicle hardware system may be exchanged with any other hardware system, or a general hardware system, and the term vehicle data value may be exchanged with any hardware system data value. In various vehicle-specific examples, the methods and devices described herein may be used by, without limitation, non-autonomous vehicles, semi-autonomous vehicles, vehicles used in public transport, piloted robots or robotic platforms, off-road vehicles, flying vessels, boats, shuttles, emergency response vehicles, motorcycles, electric or motorized bicycles, aircraft, construction vehicles, underwater craft, drones, and/or other vehicle types. In addition, although the present disclosure may be described with respect to and exposing accessing VHAL properties and characteristics, this is not intended to be limiting, and the devices and methods described herein may be used in general for any user interaction with networks in virtual reality, robotics, robotic-assistive platforms, autonomous or semi-autonomous machine applications, and/or any other technology spaces where a user may request or set properties in the networks.

Accessing data in a vehicle hardware system may comprise reading and/or writing one or more vehicle data values, and/or metadata of the vehicle data value (or vehicle data structure).

Accessing a GATT characteristic may comprise reading and/or writing one or more value in the GATT characteristic and/or metadata of the GATT characteristic (i.e. updating the corresponding entry in the GATT profile).

Synchronizing the GATT characteristic and the vehicle data value may comprise writing the at least one vehicle data value and/or metadata into the GATT profile, i.e. into the GATT characteristic (data structure), or writing the at least one value of the GATT characteristic or metadata into the vehicle data value (data structure).

A request by a UE acting as GATT Client to an electronic device in a hardware system accessing the VHAL and acting as GATT server may include a read request to the GATT characteristic, or a write request to the GATT characteristic, or a notification subscription for the GATT characteristic, which represent the corresponding vehicle data value.

The GATT profile may include a list with a plurality of entries, each having a global unique identifier (ID), wherein the GATT characteristic corresponding to (i.e. representing or synchronized with) the vehicle data value may be one of the entries of the plurality of entries in the list.

The GATT profile may include at least one GATT Service corresponding to a VHAL Service, wherein the GATT characteristic is associated with, i.e. subordinated to, the GATT Service. In particular, the GATT Profile may include one or more GATT Services representing corresponding VHAL Services, and a plurality of GATT characteristics, each associated with and corresponding to another vehicle data value, wherein the GATT Characteristics are synchronized with the corresponding VHAL properties, as described herein.

Summarizing, in order to physically interact with a vehicle, vehicle operating systems need access to the in-vehicle networks (IVN) included in the vehicle hardware system. Such operating systems include a Hardware Abstraction Layer in order to allow communication to vehicle internal networks, such as the CAN bus, the Local Interconnect Network (LIN) or according to other current and future in-vehicle communication standards, and which represents the communication interface with the IVNs. A vehicle data value may describe the vehicle hardware system, and as such each vehicle data value may be an abstraction for a specific function or a value (e.g. sensor value) of the vehicle hardware system. A GATT profile may include a plurality of Services and subordinated characteristics as entries as a list, which may be provided to a connected Bluetooth device in a predefined way according to a known Bluetooth communication protocol.

By including a part of the data available in a vehicle hardware system, i.e. a vehicle data value, into a GATT characteristic, it becomes possible to expose the vehicle data value to a paired Bluetooth device using the GATT Profile and GATT services/characteristics, thereby allowing e.g. vehicle passengers to easily access (read/write) to some of the vehicle features or settings via an application in their smartphones, wherein the application will access to those features or settings using the BLE GATT, without need for a specific SDK or library.

Although the disclosed techniques have been described with respect to certain preferred embodiments, equivalents and modifications will occur to others skilled in the art upon the reading and understanding of the specification. The present disclosure includes all such equivalents and modifications and is limited only by the scope of the appended claims.

For illustration, above, various scenarios have been disclosed in connection with a vehicle. Similar techniques may be readily applied to other kinds and types of solid systems, such as for example buildings, electronic consumer devices, or any kind of outdoor or indoor structure, which may comprise a surface of a solid-state material exposed to and receiving an external sound field.

## Claims

1. Method for making data in a vehicle hardware system accessible to an electronic device using a Generic Attribute Profile (GATT) according to a Bluetooth communication protocol, comprising:
- accessing a vehicle data value in the vehicle hardware system;
- accessing a GATT characteristic (201) of the GATT profile, which corresponds to the vehicle data value; and
- synchronizing the vehicle data value and the GATT characteristic (201).

2. Method according to claim 1, wherein the vehicle data value is a data value communicated from and to an in-vehicle communication network (IVN).

3. Method according to claim 2, wherein accessing the vehicle data value comprises accessing a Hardware Abstraction Layer of an operating system executed in the vehicle hardware system, wherein the Hardware Abstraction Layer provides access to the in-vehicle communication network (IVN).

4. Method according to claim 3, wherein the Hardware Abstraction Layer is a Vehicle Hardware Abstraction Layer (VHAL, 106) of an Android operating system, and the vehicle data value is a VHAL property.

5. Method according to one of the preceding claims, wherein:
- accessing the vehicle data value comprises reading the vehicle data value from the vehicle hardware system; and
- synchronizing the GATT characteristic (201) and the vehicle data value comprises updating a value of the GATT characteristic (201) with the vehicle data value.

6. Method according to one of the preceding claims, wherein:
- accessing the GATT characteristic (201) comprises reading a value from the GATT characteristic (201); and
- synchronizing the GATT characteristic (201) and the vehicle data value comprises updating the vehicle data value in the vehicle hardware system with the value of the GATT characteristic (201).

7. Method according to one of the preceding claims, further comprising:
- providing at least one GATT profile packet to the electronic device based on an established Bluetooth communication with the electronic device, wherein the at least one GATT profile package includes the GATT characteristic (201) synchronized with the vehicle data value; and
- receiving a request from the electronic device based on the GATT characteristic (201) synchronized with the vehicle data value.

8. Method for accessing data of a vehicle hardware system using a Generic Attribute (GATT) profile according to a Bluetooth communication protocol, comprising:
- receiving at least one GATT profile packet based on an established Bluetooth communication, wherein the at least one GATT profile package includes a GATT characteristic (201), which includes a corresponding vehicle data value of the vehicle hardware system; and
- sending a request based on the GATT characteristic (201) including the vehicle data value.

9. Electronic device (10), comprising:
- a network node (13), configured for communication based on a Bluetooth communication protocol;
- a processor (12) communicatively coupled to the network node; and
- memory (11), coupled to the processor (12), configured to store program instructions, wherein, when executed by the processor (12), the program instructions cause the electronic device (10) to perform the method according to one of claims 1 to 8.

10. Non-transitory computer-readable storage medium for use in conjunction with an electronic device (10), the computer-readable storage medium storing program instructions that, when executed by the electronic device, cause the electronic device to perform the method according to one of claims 1 to 8.
